# EUROPEAN PATENT APPLICATION

(11) **EP 0 530 478 A1**
(43) Date of publication of application: **10.03.1993**
(21) Application number: 92112277.6
(22) Date of filing: 17.07.1992
(51) Int. Cl.: B01J 47/00, B01J 49/00, B01J 41/14

(54) **Method for treating a strongly basic anion exchange resin**

(30) Priority: 22.07.1991 JP 181294/91
(71) Applicant: Mitsubishi Chemical Corporation, Chiyoda-ku Tokyo (JP)
(72) Inventor: Fukuda, Junji, Machida-shi, Tokyo (JP); Maeda, Yusuke, Tokyo (JP)
(74) Representative: Wächtershäuser, Günter, Prof. Dr.

(57) **Abstract**

A method for treating a strongly basic resin, which comprises converting the ionic form of a strongly basic anion exchange resin having quaternary ammonium groups to an organic carboxylate form, a carbonate form or a bicarbonate form, followed by heating in water.

## Description

The present invention relates to a method for treating a strongly basic anion exchange resin to reduce nonionic chlorine-substituted groups contained in such a resin.

For a high temperature high pressure boiler used in a power plant or the like, water of a particularly high quality is required. In the treatment for water of a high purity, if chloride form ion exchange groups remain in a strongly basic anion exchange resin, chlorine ions tend to elute out of the ion exchange resin, whereby the chlorine ion concentration in treated water tends to adversely increase. Therefore, it is usual to employ a resin which is regenerated to such a high level that the content of the chloride form is very low.

However, a usual strongly basic resin contains a small amount of nonionic chlorine-substituted groups (such as chloromethyl groups). If such a resin is left to stand for a long period of time in a state of the hydroxide form, such nonionic chlorine-substituted groups are likely to be decomposed and generate chlorine ions, whereby there will be a problem that the amount of the ion exchange groups of chloride form once reduced, tends to increase again.

Further, U.S. Patent 4,025,467 and Japanese Examined Patent Publication No. 42542/1990 disclose a method for reducing the amount of such nonionic chlorine-substituted groups, wherein a resin of chloride form is subjected to solvolytic substitution by exposing the resin to a high temperature in a basic aqueous solution having a pH of at least 7, and then two-step conversion is conducted by treating the resin with an aqueous solution of a carbonate, nitric acid or sulfuric acid to obtain an intermediate ionic form, followed by the treatment with sodium hydroxide which was preliminarily treated not to contain chloride impurities, to convert the chloride form of resin to a hydroxide form. Here, the solvolytic substitution is conducted by digesting the resin in a caustic solution such as sodium hydroxide e.g. at 95°C for 2 hours. However, if a strongly basic anion exchange resin is subjected to heat treatment in an alkaline aqueous solution, a part of quaternary ammonium groups (strongly basic groups) as ion exchange groups will decompose to tertiary amino groups (weakly basic groups) as described in Japanese Examined Patent Publication No. 59743/1988. Such decomposition of ion exchange groups not only reduces the ion exchange capacity, but also brings about the following problems.

Namely, in a case of a method for producing water of a high purity, ion exchange treatment is usually conducted by using a column packed with a mixture of a strongly basic anion exchange resin and a strongly acidic cation exchange resin (a mixed bed). When such a column is used for a certain period, the ion exchange ability decreases, and it becomes necessary to regenerate the ion exchange resin. Then, water is circulated upwardly from the bottom of the mixed bed, so that the anion exchange resin and the cation exchange resin will be separated utilizing the difference in the specific gravity of the respective resins. The separated respective resins will then be regenerated by means of reagents. Regeneration is conducted by supplying sodium hydroxide or the like in the case of the anion exchange resin and hydrochloric acid or the like in the case of a cation exchange resin. At the time of this separation operation, the two resins are usually mixed to some extent in the vicinity of the interface between the two resins, and it is difficult to completely separate them. If the subsequent regeneration operation is conducted in such a mixed state of the two resins, a problem so-called reverse regeneration will result. Namely, in a case where a cation exchange resin is to be regenerated, if, for example, hydrochloric acid is used as a regenerating agent, the ionic form of an anion exchange resin included in the cation exchange resin will be converted to a chloride form. If weakly basic groups are present in such an anion exchange resin, there will be a problem that at the time of washing with water after the regeneration, washing with water can not easily be completed. This occurs, since chlorine ions adsorbed by weakly basic groups will be hydrolyzed and leaks out at the time of washing with water. Namely, if weakly basic groups are present in the ion exchange groups of the strongly basic anion exchange resin, there will be a problem that in the water washing operation after the regeneration, the amount of washing water has to be increased substantially as compared with a strongly basic anion exchange resin having no weakly basic groups.

In this connection, the present applicant has conducted an experiment, as described below.

### EXPERIMENT

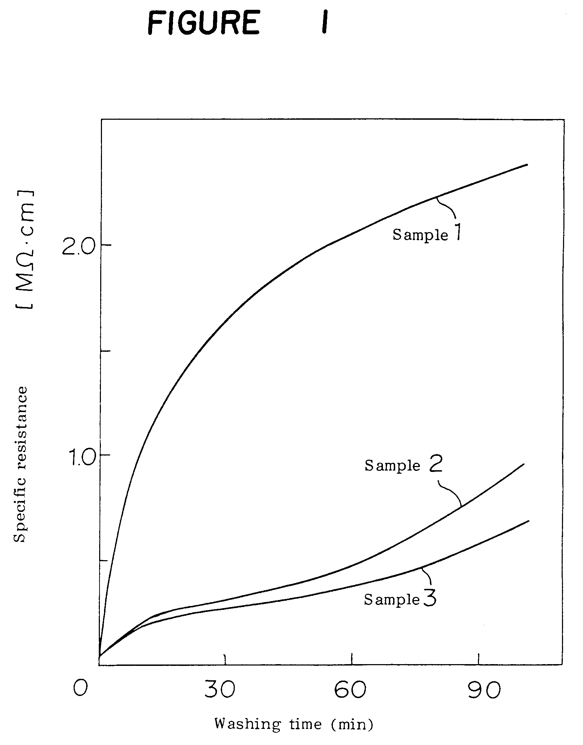

Each of strongly basic anion exchange resins containing weakly basic groups in amounts of 0.00, 0.03 and 0.04 meq/mℓ-Resin, respectively (hereinafter referred to as Samples 1, 2 and 3, respectively; Sample 1 was prepared by using the resin of Example 1 given hereinafter, and Samples 2 and 3 were respectively prepared by a method in accordance with Comparative Example 1), was completely converted to a chloride form with a 2N hydrochloric acid aqueous solution, and then thoroughly washed with water. Then, 10 mℓ of the resin was accurately measured and packed into a small glass column, and deionized water was permitted to flow through the column at a flow rate of 10 ℓ/hr, whereby the specific resistance of water at the outlet of the column was measured. The specific resistance being small means that chlorine ions exist in water. The results are shown in Figure 1. From Figure 1, it is evident that when weakly basic groups are present, water washability tends to be extremely inferior.

In the accompanying drawing, Figure 1 shows the results of the experiment in which water washability was compared as between a case where weakly basic groups exist in a strongly basic anion exchange resin and a case where no such weakly basic groups exists.

It is an object of the present invention to provide a method for treating a strongly basic anion exchange resin, whereby a resin of hydroxide form having the amount of nonionic chlorine-substituted groups minimized can be obtained without causing side reactions as found in the prior art.

The present invention provides a method for treating a strongly basic resin, which comprises converting the ionic form of a strongly basic anion exchange resin having quaternary ammonium groups to an organic carboxylate form, a carbonate form or a bicarbonate form, followed by heating in water.

Now, the present invention will be described in detail with reference to the preferred embodiments.

The strongly basic anion exchange resin to be treated by the present invention may be any resin so long as it has quaternary ammonium groups as ion exchange groups. Usually, it is a resin composed essentially of a crosslinked copolymer of at least one monovinyl aromatic compound such as styrene, vinyl toluene or ethylstyrene and at least one polyvinyl aromatic compound such as divinyl benzene, trivinyl benzene, divinyl toluene or divinyl xylene. In the preparation of such a crosslinked copolymer, an aliphatic vinyl compound may be used in combination with the above aromatic compounds. Preferred is a crosslinked copolymer using styrene and ethyl styrene as the monovinyl aromatic compounds and divinyl benzene as the polyvinyl aromatic compound. Here, a case where industrial divinyl benzene contains 40% or more of ethylstyrene, is included.

Then, using a suitable haloalkylating agent and a catalyst, chloroalkyl groups such as chloromethyl groups are introduced to such a crosslinked copolymer and then reacted with a tertiary amine such as dimethylethanolamine, trimethylamine or triethylamine to convert them to quaternary ammonium groups, in accordance with conventional methods.

The polyvinyl aromatic compound is used in an amount within a range of from 1 to 25% by weight, based on the total amount of the aromatic compounds. The production of the copolymer from the monovinyl aromatic compound and the polyvinyl aromatic compound is conducted usually by suspension polymerization. The polymerization is conducted under heating in the presence of a polymerization initiator in an aqueous dispersing medium, sometimes including a chemical in the organic phase which is a solvent for these aromatic compounds, but is a non-solvent for the resulting crosslinked copolymer.

As the chemical to be used for the polymerization, toluene, xylene or isooctane may, for example, be mentioned. As the polymerization initiator, benzoyl peroxide, lauroyl peroxide, azobisisobutyronitrile or tert-butyl peroxide may, for example, be used.

The temperature for the polymerization reaction is usually within a range of from 50 to 100°C, although it depends on e.g. the type of the catalyst.

As the chloroalkylating agent to be used for chloroalkylation, chloromethyl methyl ether, chloroethyl methyl ether or chloromethyl ethyl ether may, for example, be mentioned. As the catalyst for chloroalkylation, zinc chloride, anhydrous aluminum chloride, tin chloride or iron chloride may, for example, be mentioned. The catalyst is used in an amount of from 1 to 100% by weight relative to the copolymer. As an alternative method, chloroalkylation may be conducted, for example, by means of a mixture of formaldehyde and hydrochloric acid. Such a reaction is usually conducted at a temperature of from 40 to 60°C for from a few hours to one day in an organic solvent such as ethylene dichloride, propylene dichloride or chlorobenzene.

Then, a crosslinked copolymer having haloalkyl groups thus obtained, is reacted with a tertiary amine of the formula NR¹R²R³ wherein each of R¹, R² and R³ is an alkyl group such as a methyl group or an ethyl group, a hydroxyalkyl group such as a β-hydroxyethyl group, a benzyl group or a phenyl group. Specific examples of the tertiary amine include trimethylamine, triethylamine, tripropylamine, dimethylethylamine, dimethylbenzyl amine, dimethylethanolamine, dimethylaniline, tributylamine, diphenylethylamine, and benzylphenylmethylamine. The reaction with such an amine may be conducted at an ordinary temperature or at an elevated temperature.

Resins produced as described above are usually commercially available. Such commercial products include, for example, Diaion (trademark) SA10A, SA12A, SAN1, SA20A, PA312, and PA418 (tradenames, manufactured by Mitsubishi Kasei Corporation), Amberlite (trademark) IRA400, IRA410, IRA900 and IRA910 (tradenames, manufactured by Rohm & Haas, U.S.A or Tokyo Yuki K.K.), Dowex (trademark) SAR, SAR-P and SBR (tradenames, manufactured by Dow Chemical, U.S.A).

The method for treating a strongly basic anion exchange resin according to the present invention is characterized in that by treating such a commercially available resin by a simple method, it is possible to reduce a nonionic chlorine which creates a serious problem during the use, to a substantially non-detectable level without forming weakly basic groups.

These resins may also be produced by a method, other than the above described method, wherein a crosslinked copolymer of e.g. vinylbenzyl chloride as a monomer having a halogen atom preliminarily introduced, with divinyl benzene, is produced, and such a crosslinked copolymer is reacted with a tertiary amine such as trimethylamine, triethylamine or dimethylethanolamine.

In the present invention, to convert the ionic form of the strongly basic anion exchange resin having quaternary ammonium groups to an organic carboxylate form, an organic acid including a monocarboxylic acid such as acetic acid, propionic acid or lactic acid and a polybasic carboxylic acid such as malic acid or citric acid, or a salt of such an organic acid, such as an alkali metal salt or an ammonium salt, may be employed. To convert it to a carbonate form or to a bicarbonate form, carbonic acid or bicarbonic acid, or a salt thereof, such as an alkali metal salt or an ammonium salt thereof, may be employed. Among these reagents, acetic acid, sodium carbonate, sodium bicarbonate or sodium acetate is particularly preferably used. Such an organic carboxylic acid, a carbonate or a bicarbonate is, in the form of a from 0.1 to 30%, preferably from 5 to 15%, aqueous solution or water-containing methanol or ethanol solution, passed through a column packed with the resin to conduct the conversion to an organic carboxylate form, a carbonate form or a bicarbonate form (hereinafter generally referred to as "a carboxylate form, etc."). The conversion to a carboxylate form, etc. may be conducted also by a batch system. The amount of a carboxylic acid, a carboxylate, a carbonate or a bicarbonate is preferably at least a level of the ion exchange capacity of the resin in terms of equivalent, more preferably from 1.2 to 3 times the ion exchange capacity of the resin. The higher the conversion ratio to a carboxylate form, etc., the better. Usually, the conversion ratio is preferably at least 90%, more preferably at least 95%. Usually, the heating temperature in water of the ion exchange resin converted to the carboxylate form, etc. is at least 75°C, preferably from 95 to 120°C. The time required for the heat treatment is from 1 to 20 hours, preferably from 6 to 12 hours. After the heat treatment, the resin is washed with water and subjected to a regeneration operation in accordance with a conventional method, whereby a regenerated type strongly basic anion exchange resin containing no substantial weakly basic groups and having nonionic chlorine-substituted groups extremely reduced, can be obtained.

The regeneration operation is preferably conducted by a two-step conversion as described in U.S.P. 4,025,467.

Now, the present invention will be described in further detail with reference to Examples. However, it should be understood that the present invention is by no means restricted by such specific Examples.

### EXAMPLE 1

200 mℓ of a chloride form of commercially available porous strongly basic anion exchange resin Diaion (trademark) PA312 (manufactured by Mitsubishi Kasei Corporation) was packed into a glass column, and 4000 mℓ of a 8 wt% sodium hydroxide aqueous solution was passed through the column over a period of 2 hours. Then, the column was washed with 1000 mℓ of deionized water to convert the resin to a hydroxide form. To this resin, 2000 mℓ of a 12 wt% acetic acid aqueous solution was contacted over a period of one hour to convert it to an acetate form. Then, the resin was washed with 1000 mℓ of deionized water. The resin thus converted to an acetate form was added to deionized water of 3 times by volume and subjected to heat treatment at 100°C for 8 hours under stirring in a round bottom flask. The pH of the liquid during the heat treatment gradually changed from 4.4 at the initial stage to 4.7 upon expiration of 8 hours, but was always on the acidic side.

Resin samples before and after the heat treatment were packed in separate columns, respectively, and a 15 wt% nitric acid aqueous solution was passed through the respective columns in an amount of 20 times by volume to completely drive out ionic chlorine, and then the resins were thoroughly washed with deionized water. These resin samples were analyzed by a known radio-activate analysis (see "Shin Jikken Kagaku Koza ll" compiled by Japan Chemical Society p. 89-103 and "Kiki Bunseki" published by Shokabo, 12th edition, p. 316-329) to measure the amount of nonionic chlorine-substituted groups contained in these samples. Further, with respect to the heat treated sample, the difference between the hydrochloric acid adsorption capacity and the sodium chloride decomposition capacity was measured to obtain the content of weakly basic groups. Further, as Comparative Example 1, using the same commercially available resin as used in Example 1, the properties of the resin which was heat-treated at 100°C for 2 hours in a 4 wt% sodium hydroxide aqueous solution of 2 times by volume to the resin, were measured in the same manner.

The results are shown below.

| | Content of nonionic chlorine-substituted groups | Content of weakly basic groups |
|---|---|---|
| Before the heat treatment | 780 ppm | 0.00 meg/mℓ resin |
| After the heat treatment | 70 ppm | 0.00 meg/mℓ resin |
| Comparative Example 1 | 140 ppm | 0.05 meg/mℓ resin |

### EXAMPLE 2

Using commercially available gel-type strongly basic anion exchange resin Diaion (trademark) SA10A (manufactured by Mitsubishi Kasei Corporation), the conversion to a propionic acid form and heat treatment were conducted in the same manner as in Example 1 except that acetic acid was changed to propionic acid. Further, as Comparative Example 2, the same commercially available resin as used in Example 2 was heat-treated at 100°C for 4 hours in a 6 wt% sodium hydroxide aqueous solution of 2 times by volume to the resin. The properties of the respective resins thus obtained were measured in the same manner as in Example 1, and the results are shown below.

| | Content of nonionic chlorine-substituted groups | Content of weakly basic groups |
|---|---|---|
| Before the heat treatment | 690 ppm | 0.00 meg/mℓ resin |
| After the heat treatment | 84 ppm | 0.00 meg/mℓ resin |
| Comparative Example 2 | 160 ppm | 0.04 meg/mℓ resin |

### EXAMPLE 3

200 mℓ of the above-mentioned strongly basic anion exchange resin Diaion (trademark) PA312 (chloride-form) was treated in the same manner as in Example 1 to convert it to a hydroxide form, followed by washing with water. Then, 2000 mℓ of a 8 wt% sodium carbonate aqueous solution was passed through the column of the resin for one hour to convert the resin to a carbonate form, followed by washing with 1000 mℓ of deionized water. The resin thus converted to a carbonate form was subjected to heat treatment in the same manner as in Example 1. The properties of the resin thereby obtained were measured in the same manner as in Example 1, and the results are shown below.

| | Content of nonionic chlorine-substituted groups | Content of weakly basic groups |
|---|---|---|
| Before the heat treatment | 780 ppm | 0.00 meg/mℓ resin |
| After the heat treatment | 90 ppm | 0.00 meg/mℓ resin |
| Comparative Example 1 | 140 ppm | 0.05 meg/mℓ resin |

### EXAMPLE 4

The above-mentioned gel-type strongly basic anion exchange resin Diaion (trademark) SA10A was treated in the same manner as in Example 3 except that sodium carbonate was changed to sodium bicarbonate to convert it to a bicarbonate form, followed by heat treatment. The properties of the resin thereby obtained were measured in the same manner as in Example 1, and the results are shown below.

| | Content of nonionic chlorine-substituted groups | Content of weakly basic groups |
|---|---|---|
| Before the heat treatment | 690 ppm | 0.00 meg/mℓ resin |
| After the heat treatment | 95 ppm | 0.00 meg/mℓ resin |
| Comparative Example 2 | 160 ppm | 0.04 meg/mℓ resin |

## Claims

1. A method for treating a strongly basic resin, which comprises converting the ionic form of a strongly basic anion exchange resin having quaternary ammonium groups to an organic carboxylate form, a carbonate form or a bicarbonate form, followed by heating in water.

2. The method according to Claim 1, wherein the strongly basic anion exchange resin is composed essentially of a crosslinked copolymer of a monovinyl aromatic compound and a polyvinyl aromatic compound.

3. The method according to Claim 2, wherein the monovinyl aromatic compound is at least one compound selected from the group consisting of styrene, vinyl toluene and ethylstyrene.

4. The method according to Claim 2, wherein the polyvinyl aromatic compound is at least one compound selected from the group consisting of divinyl benzene, trivinyl benzene, divinyl toluene and divinyl xylene.

5. The method according to Claim 1, wherein the strongly basic anion exchange resin is the one obtained by halomethylating a crosslinked copolymer of a monovinyl aromatic compound and a polyvinyl aromatic compound, followed by reacting a tertiary amine.

6. The method according to Claim 5, wherein the tertiary amine is represented by the formula NR¹R²R³ wherein each of R¹, R² and R³ is an alkyl group, a hydroxyalkyl group, a benzyl group or a phenyl group.

7. The method according to Claim 1, wherein the ionic form of strongly basic anion exchange resin is converted to an organic carboxylate form, a carbonate form or a bicarbonate form by means of a reagent selected from the group consisting of an organic carboxylic acid selected from the group consisting of acetic acid, propionic acid, citric acid, lactic acid and malic acid, carbonic acid, bicarbonic acid and alkali metal salts and ammonium salts thereof.

8. The method according to Claim 7, wherein the ionic form of strongly basic anion exchange resin is converted to the salt form by means of acetic acid, sodium acetic acid, sodium carbonate or sodium bicarbonate.

9. The method according to Claim 1, wherein the heating temperature in water of the ionic form of strongly basic anion exchange resin converted to the salt form is at least 75°C.

10. The method according to Claim 9, wherein the heating temperature is within a range of from 95 to 120°C.

11. The method according to Claim 1, wherein the time for the heat treatment is within a range of from 1 to 20 hours.

12. The method according to Claim 11, wherein the time for the heat treatment is within a range of from 6 to 12 hours.

13. A method for treating a strongly basic resin, which comprises passing through a column of a strongly basic anion exchange resin having quaternary ammonium groups an aqueous, methanol or ethanol solution containing from 0.1 to 30% by weight of an organic carboxylic acid, carbonic acid, bicarbonic acid or an alkali metal salt or an ammonium salt thereof in an amount of from 1.2 to 3 times by equivalent of the ion exchange capacity of the resin, to convert the ionic form of resin to a salt form, followed by heating in water.
